# EUROPEAN PATENT SPECIFICATION

(11) **EP 3 599 895 B1**
(45) Date of publication and mention of the grant of the patent: **28.08.2024**
(21) Application number: 18713273.3
(22) Date of filing: 29.03.2018
(51) Int. Cl.: A23L 33/00, A23L 33/115, A23L 33/21

(54) **INFANT FORMULA FOR IMPROVED EATING BEHAVIOUR**
SÄUGLINGSNAHRUNG FÜR VERBESSERTES ESSVERHALTEN
FORMULE POUR NOURRISSON POUR AMÉLIORER LE COMPORTEMENT ALIMENTAIRE

(30) Priority: 29.03.2017 EP 17163502
(43) Date of publication of application: 05.02.2020
(73) Proprietor: N.V. Nutricia, 2712 HM Zoetermeer (NL)
(72) Inventor: VEREIJKEN, Carolus Maria Johannes Leonardus, 3584 CT Utrecht (NL); VAN DER BEEK, Eline Marleen, 3584 CT Utrecht (NL); ACTON, Dennis Stanley, 3584 CT Utrecht (NL)
(74) Representative: Nederlandsch Octrooibureau
(86) International application number: PCT/EP2018/058221
(87) International publication number: WO 2018/178302

(56) References cited:
- EP-A1- 2 825 062
- EP-B1- 2 825 062
- WO-A1-2013/191533
- WO-A1-2015/065193
- WO-A1-2015/067325
- WO-A1-2017/064304
- KIMBERLEY M. MALLAN ET AL: "Confirmatory factor analysis of the Baby Eating Behaviour Questionnaire and associations with infant weight, gender and feeding mode in an Australian sample", APPETITE, vol. 82, 1 November 2014 (2014-11-01), US, pages 43 - 49, XP055471676, ISSN: 0195-6663, DOI: 10.1016/j.appet.2014.06.026
- CLARE H LLEWELLYN ET AL: "Development and factor structure of the Baby Eating Behaviour Questionnaire in the Gemini birth cohort", APPETITE, ACADEMIC PRESS, NEW YORK, NY, US, vol. 57, no. 2, 27 May 2011 (2011-05-27), pages 388 - 396, XP028273319, ISSN: 0195-6663, [retrieved on 20110606], DOI: 10.1016/J.APPET.2011.05.324
- SPROSTON MOLLY J ET AL: "Enzymatic Modification of Anhydrous Milkfat with n-3 and n-6 Fatty Acids for Potential Use in Infant Formula: Comparison of Methods", JOURNAL OF THE AMERICAN OIL CHEMISTS' SOCIETY (JAOCS), SPRINGER, DE, vol. 93, no. 2, 8 December 2015 (2015-12-08), pages 251 - 265, XP035947533, ISSN: 0003-021X, [retrieved on 20151208], DOI: 10.1007/S11746-015-2763-8
- MICHALSKI M C ET AL: "Size distribution of fat globules in human colostrum", JOURNAL OF DAIRY SCIENCE, AMERICAN DAIRY SCIENCE ASSOCIATION, US, vol. 88, 1 January 2005 (2005-01-01), pages 1 - 14, XP002505628, ISSN: 0022-0302, DOI: 10.3168/JDS.S0022-0302(05)72868-X
- GALLIER SOPHIE ET AL: "A novel infant milk formula concept: Mimicking the human milk fat globule structure", COLLOIDS AND SURFACES. B, BIOINTERFACES, ELSEVIER, AMSTERDAM, NL, vol. 136, 15 September 2015 (2015-09-15), pages 329 - 339, XP029369052, ISSN: 0927-7765, DOI: 10.1016/J.COLSURFB.2015.09.024

## Description

### Field of the invention

The invention is in the field of infant formula, in particular concerns a non-medical method for promoting improved eating behaviour in an infant.

### Background of the invention

Human milk is the uncontested gold standard concerning infant nutrition. However, in some cases breastfeeding is inadequate or unsuccessful for medical reasons or because of a choice not to breastfeed. For such situations infant or follow on formulas have been developed. Commercial infant formulas are commonly used today to provide supplemental or sole source of nutrition early in life. These formulas comprise a range of nutrients to meet the nutritional needs of the growing infant, and typically include fat, carbohydrate, protein, vitamins, minerals, and other nutrients helpful for optimal infant growth and development. Commercial infant formulas are designed to mimic, as closely as possible, the composition and function of human milk.

In the art it has been indicated that the growth curve of infants fed with commercial infant formula differs from the growth curve of breast-fed infants. Typically an infant formula has a growth (i.e. weight) accelerating effect in the first year of life. Li et al, 2010, Pediatrics 125:e1386-e1393 discloses that infants that are bottle-fed in early infancy are more likely to empty the bottle or cup in late infancy than those who are fed directly at the breast. Bottle-feeding, regardless of the type of milk, is distinct from feeding at the breast in its effect on infants' self-regulation of milk intake.

In WO 2010/070613 it is disclosed that a lower weight gain in the first week of life was observed when using a formula with a very low caloric content and low protein content based on volume. Volume intake of the formulae was not affected.

Koletzko et al, 2009, Am J Clin Nutr 89:1836-1845 disclose that using an isocaloric infant and follow on formula with a protein content of 1.77 and 2.1 g /100 kcal resulted in less protein intake, an slightly higher energy intake, than in the group of infants consuming an infant or follow on formula with a high protein concentration of 2.9 and 4.4 g/100 kcal.

WO 2011/108934 relates to a method for programming the post-prandial fat handling in an infant by a nutritional composition comprising lipid globules coated with phospholipid.

WO 2013/036123 relates to infant nutrition comprising lipid globules with a coating comprising phospholipid. This infant nutrition has programming effects on the body and results in an increased leptin sensitivity later in life and thus affects (self) regulation of food intake later in life.

US 2014/0162223 provides methods for preventing and/or reducing early childhood obesity that may help install early healthy eating habits and nutritious food preferences for infants and young children, promote an appropriate early growth trajectory, and a long term weight status that is consistent with public policy recommendations and associated with long term health. WO 2013/195333 discloses infant formula with a mixture of vegetable fat and milk fat with relatively large lipid globules which have a coating comprising phospholipid for providing nutrition

Non-prepublished WO 2017/064304 discloses an infant formula comprising lipid, protein, digestible carbohydrate with relatively large lipid globules, that is administered to an infant at least during the first 2 months of life until an age below 6 months and improves postnatal growth or body development

### Summary of the invention

An efficacy study on the growth and safety of an experimental infant formula during 3-4 months intervention was conducted in healthy, term infants compared to a standard formula and a breast-fed reference. In a randomized, controlled, multi-centre, double-blinded, prospective clinical trial, infants were enrolled and assigned to receive one of two formulae until 17 weeks of age: 1) an infant formula comprising lipid in the form of large lipid globules comprising a coating comprising phospholipids or 2) a control infant formula with standard, smaller, lipid globules coated with protein. The composition of the formulas was similar in energy and macronutrient composition.

The results of the baby eating behaviour questionnaire (BEBQ), obtained at the end of the intervention period at 17 weeks of age (4 months), showed that the experimental infant formula had effects on eating behaviour in the direction of healthier eating behaviour. An improvement was observed for all five scales. In particular in comparison to the control group, the experimental group had statistically significant lower scores for food responsiveness and general appetite

### Detailed description of the invention

The present invention concerns a non-medical method for promoting improved eating behaviour in an infant, said method comprising feeding said infant an infant formula or follow on formula comprising lipid, protein and digestible carbohydrates, wherein the lipid is in the form of lipid globules, and a) the lipid globules have a mode diameter based on volume of at least 1 µm and/or at least 45 vol.% of the lipid globules has a diameter of 2 to 12 µm, and b) the lipid comprises at least 0.5 wt.% phospholipid based on total lipid and the lipid globules have a coating comprising phospholipid, wherein the improved eating behaviour is selected from the group consisting of a decreased food responsiveness and a decreased general appetite as determined using the Baby Eating Behaviour Questionnaire (BEBQ) according to Llewellyn et al., 2011, Appetite, 57:388-96, wherein the lipid contains at least 10 wt.% palmitic acid based on total fatty acids, and at least 15 wt.% of palmitic acid, based on total palmitic acid, is located at the sn-2 position of a triglyceride, and wherein the infant formula or follow on formula is not human milk and wherein the infant formula or follow on formula is used at least during the first 2 months of life and is administered to an infant with an age below 6 months; and wherein the improved eating behaviour is compared to the eating behaviour in infants fed infant formula or follow on formula that comprises vegetable fat that is present in the form of lipid globules with a mode diameter, based on volume, of about 0.5 µm, and wherein the lipid globules do not have a coating comprising phospholipid.

### Baby Eating Behaviour

The Baby Eating Behaviour Questionnaire (BEBQ) (Llewellyn et al., 2011, Appetite, 57:388-96) is an extensively validated tool which has shown to be able to assess eating behaviour in infants during the milk feeding period. Alternatively, eating behaviour can be worded as pattern of energy intake behaviour. The BEBQ generates scores on the following 5 scales: 4 of which are distinct feeding traits, food responsiveness, enjoyment of food, satiety responsiveness, slowness in eating and one scoring general appetite. 'Enjoyment of food' (4 questions) relates to the infant's perceived liking of milk and of feeding in general, 'food responsiveness' (6 questions) relates to the infants level of responsiveness to external cues of milk and feeding, 'slowness in eating' (4 questions) measures the speed with which an infant typically feeds, and 'satiety responsiveness' (3 questions) assesses how easily the infant gets full during a feed, in other words responds to internal cues of satiety. The correlation between food responsiveness and satiety responsiveness is low with a shared variance of about 4 % (see Llewellyn et al., 2011, Appetite, 57:388-96 Table 5 showing a correlation coefficient of-0.21). The item `My baby has a big appetite' correlated with all scales, and may be used as a stand-alone item to measure overall appetite. A decreased enjoyment of food, a decreased food responsiveness, an increased satiety responsiveness, and increased slowness of eating and a decreased appetite are in general considered beneficial for the infant and have an impact on health (Jaarsveld et al 2014, JAMA Pediatr 168:345-350; Malian et al, 2014, Appetite 82: 43-49).

In the method according to the present invention, an infant formula or follow on formula is administered to an infant. In the context of the present invention an infant has an age up to 12 months. Preferably the infant formula or follow on formula is administered to or is used in a term infant. A term infant means an infant born at a gestational age of ≥37 to ≤42 weeks. Preferably the infant formula or follow on formula is administered to or is used in a healthy infant. The infant formula or follow on formula is used at least during the first 2 months of life, preferably at least during the first 3 months of life of the infant, more preferably at least during the first 4 months of life of the infant. The infant formula or follow on formula is administered to an infant with an age below 6 months, more preferably below 4 months of age.

In one embodiment, the infant formula or follow on formula is of particular benefit for infants that are exposed to an obesogenic environment or that are exposed to a Western type diet later in life. Preferably the infant formula or follow on formula in the method according to the present invention is administered to infants that are exposed to or raised in an obesogenic environment. The term obesogenic environment refers to an environment that promotes gaining weight and to an environment that is not conducive to weight loss within the home or workplace (Swinburn, et al., 1999, Prev Med 29:563-570). In other words, the obesogenic environment refers to an environment that promotes, induces, helps, or contributes to, obesity. Factors that contribute are urbanization, often accompanied by a reduction in physical activity, and easy access to food. In one embodiment, the infant formula or follow on formula is of particular benefit for infants that are exposed to an environment wherein the average diet is a Western style diet that is high in fat and is high in saturated fatty acids, with the fat providing more than 35 % of the total calories of the diet, and with the saturated fatty acids providing more than 10 % of the total calories of the diet, more in particular a Western style diet that is characterised as comprising fat providing between 35 and 45 % of the total calories of the diet and comprising saturated fatty acids providing between 10 and 20 % of the total calories of the diet.

In one embodiment, the infant formula or follow on formula is of particular benefit for hungrier babies. Infant and follow on formula for hungrier babies are on the market, for example Aptamil 2 Hungry, Cow&Gate 2 infant milk for hungrier babies, SMA white extra hungry infant milk, and typically have been modified to contain a higher proportion of casein than that present in breast milk or standard infant or follow on formula. Casein takes longer to digest, so the baby stays satisfied for longer. These milks are suited to the larger full-term baby and the "hungry" baby, until one year of age. These milks are also sometimes used to delay weaning in infants of 4 to 6 month of age. In a preferred embodiment the formula is an infant formula or follow on formula for hungrier babies or a hungry infant milk.

The improved eating behaviour is selected from the group consisting of a decreased food responsiveness and a decreased general appetite.

In the context of the present invention, the eating behaviour is determined using the Baby Eating Behaviour Questionnaire (BEBQ). More in particular, in the context of the present invention each of rate of eating, satiety responsiveness, food responsiveness, level of enjoyment of food, and level of appetite is determined using the Baby Eating Behaviour Questionnaire (BEBQ).

### Lipid

The infant formula or follow on formula that is to be administered according to the present method comprises lipid. Lipid in the present invention comprises one or more selected from the group consisting of triglycerides, polar lipids (such as phospholipids, cholesterol, glycolipids, sphingomyelin), free fatty acids, monoglycerides and diglycerides.

The lipids provide preferably 30 to 60 % of the total calories of the infant formula or follow on formula. More preferably the infant formula or follow on formula comprises lipid providing 35 to 55 % of the total calories, even more preferably the infant formula or follow on formula comprises lipids providing 40 to 50 % of the total calories. The lipids are preferably present in an amount of 4 to 6 g per 100 kcal. When in liquid form, e.g. as a ready-to-feed liquid, the infant formula or follow on formula preferably comprises 2.1 to 6.5 g lipids per 100 ml, more preferably 3.0 to 4.0 g per 100 ml. Based on dry weight the infant formula or follow on formula preferably comprises 10 to 50 wt.%, more preferably 12.5 to 40 wt.% lipids, even more preferably 19 to 30 wt.% lipids.

The lipid that is to be administered according to the present method preferably comprises vegetable lipids. The presence of vegetable lipids advantageously enables an optimal fatty acid profile, high in polyunsaturated fatty acids and/or more reminiscent to human milk fat. Lipids from cow's milk alone, or other domestic mammals, do not provide an optimal fatty acid profile. The amount of essential fatty acids is too low. Preferably the infant formula or follow on formula comprises at least one, preferably at least two lipid sources selected from the group consisting of linseed oil (flaxseed oil), rape seed oil (such as colza oil, low erucic acid rape seed oil and canola oil), sunflower oil, high oleic sunflower oil, safflower oil, high oleic safflower oil, olive oil, coconut oil, palm oil and palm kernel oil. Preferably the infant formula or follow on formula comprises 5 to 100 wt.% vegetable lipids based on total lipids, more preferably 5 to 95 wt.%, more preferably 20 to 80 wt.%, even more preferably 25 to 75 wt.%, most preferably 40 to 60 wt.%. It is noted therefore that the infant formula or follow on formula also may comprise non-vegetable lipids. Non-vegetable lipids may include milk fat, milk derived lipid as a preferred source of phospholipid, and fish oil, marine and/or microbial oils as source of LC-PUFA.

### Lipid globule size

According to the present invention, lipid is present in the infant formula or follow on formula in the form of lipid globules. When in liquid form these lipid globules are emulsified in the aqueous phase. Alternatively the lipid globules are present in a powder and the powder is suitable for reconstitution with water or another food grade aqueous phase. The lipid globules comprise a core and a surface.

The lipid globules in the infant formula or follow on formula to be administered according to the present method have a volume-weighted mode diameter above 1.0 µm, preferably above 3.0 µm, more preferably 4.0 µm or above, preferably between 1.0 and 10 µm, more preferably between 2.0 and 8.0 µm, even more preferably between 3.0 and 7.0 µm, most preferably between 4.0 µm and 6.0 µm. Alternatively, or preferably in addition, the size distribution is in such a way that at least 45 volume %, preferably at least 55 volume %, even more preferably at least 65 volume %, even more preferably at least 75 volume % of the lipid globules have a diameter between 2 and 12 µm. More preferably at least 45 volume %, preferably at least 55 volume %, even more preferably at least 65 volume %, even more preferably at least 75 volume % of the lipid globules have a diameter between 2 and 10 µm. Even more preferably at least 45 volume %, preferably at least 55 volume %, even more preferably at least 65 volume %, even more preferably at least 75 volume % of the lipid globules have a diameter between 4 and 10 µm. Preferably less than 5 volume % of the lipid globules have a diameter above 12 µm.

Standard infant formulae or follow on formula have lipid globules with mode diameter, based on volume of the lipid, below 0.5 µm. It was found that the presence of large lipid globules with a diameter of at least 1 µm, or that a significant part of the lipid globules has a diameter of 2 to 12 µm, promotes improvement of eating behaviour.

The percentage of lipid globules is based on volume of total lipid. The mode diameter relates to the diameter which is the most present based on volume of total lipid, or the peak value in a graphic representation, having on the X-as the diameter and on the Y-as the volume (%).

The volume of the lipid globule and its size distribution can suitably be determined using a particle size analyzer such as a Mastersizer (Malvern Instruments, Malvern, UK), for example by the method described in Michalski et al, 2001, Lait 81: 787-796.

### Phospholipid

According to the present invention, the lipid in the infant formula or follow on formula comprises at least 0.5 wt.% phospholipid based on total lipid and the lipid globules in the infant formula or follow on formula to be administered according to the present method have a coating comprising phospholipid. By 'coating' is meant that the outer surface layer of the lipid globules comprises phospholipid, whereas phospholipid is virtually absent in the core of the lipid globule. The presence of phospholipid in the infant formula or follow on formula was found to advantageously promote improvement of eating behaviour. A suitable way to determine whether phospholipid is located on the surface of lipid globules is confocal laser scanning microscopy or transmission electron microscopy, see for instance Gallier et al, 2015, Colloids Surf B Biointerfaces 136:329-339.

The infant formula or follow on formula preferably comprises glycerophospholipids. Examples of glycerophospholipids are phosphatidylcholine (PC), phosphatidylserine (PS), phosphatidylethanolamine (PE), phosphatidylinositol (PI) and phosphatidylglycerol (PG). Preferably the infant formula or follow on formula contains PC, PS, PI and/or PE, more preferably at least PC.

The infant formula or follow on formula preferably comprises sphingomyelin. Sphingomyelins have a phosphorylcholine or phosphorylethanolamine molecule esterified to the 1-hydroxy group of a ceramide. They are classified as phospholipid as well as sphingolipid, but are not classified as a glycerophospholipid nor as a glycosphingolipid. Preferably the infant formula or follow on formula comprises 0.05 to 10 wt.% sphingomyelin based on total lipid, more preferably 0.1 to 5 wt.%, even more preferably 0.2 to 2 wt.%. Preferably the infant formula or follow on formula comprises at least 5 wt.%, more preferably 5 to 40 wt.% sphingomyelin based on total phospholipid, more preferably 10 to 35 wt.%, even more preferably 15 to 35 wt.%, based on total phospholipid.

The infant formula or follow on formula preferably comprises glycosphingolipids. The term glycosphingolipids in the present context particularly refers to glycolipids with an amino alcohol sphingosine. The sphingosine backbone is O-linked to a charged headgroup such as ethanolamine, serine or choline backbone. The backbone is also amide linked to a fatty acyl group. Glycosphingolipids are ceramides with one or more sugar residues joined in a beta-glycosidic linkage at the 1-hydroxyl position, and include gangliosides. Preferably the infant formula or follow on formula contains gangliosides, more preferably at least one ganglioside selected from the group consisting of GM3 and GD3.

Preferably the infant formula or follow on formula comprises 0.5 to 20 wt.% phospholipid based on total lipid, more preferably 0.5 to 10 wt.%, more preferably 0.75 to 8 wt.%, even more preferably 1.0 to 8 wt.% even more preferably 1.5 to 5 wt.% phospholipid based on total lipid. Preferably the infant formula or follow on formula comprises 0.1 to 10 wt.% glycosphingolipids based on total lipid, more preferably 0.5 to 5 wt.%, even more preferably 2 to 4 wt.%, based on total lipid.

The infant formula or follow on formula preferably comprises cholesterol. The infant formula or follow on formula preferably comprises at least 0.005 wt.% cholesterol based on total lipid, more preferably at least 0.02 wt.%, more preferably at least 0.05 wt.%., even more preferably at least 0.1 wt.%. Preferably the amount of cholesterol does not exceed 10 wt.% based on total lipid, more preferably does not exceed 5 wt.%, even more preferably does not exceed 1 wt.% based on total lipid in the infant formula or follow on formula.

Preferred sources for providing the phospholipid, glycosphingolipid and/or cholesterol are egg lipids, milk fat, buttermilk fat and butter serum fat (such as beta serum fat). A preferred source for phospholipid, particularly PC, is soy lecithin and/or sunflower lecithin. The infant formula or follow on formula preferably comprises phospholipid derived from mammalian milk. Preferably the infant formula or follow on formula comprises phospholipid and glycosphingolipid derived from milk. Preferably also cholesterol is obtained from milk. Phospholipid derived from milk include phospholipid that is isolated from milk lipid, cream lipid, cream serum lipid, butter serum lipid (beta serum lipid), whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from butter. Preferably the phospholipid, glycosphingolipid and/or cholesterol is obtained from milk cream. The infant formula or follow on formula preferably comprises phospholipid, glycosphingolipid and/or cholesterol from milk of cows, mares, sheep, goats, buffalos, horses and camels. It is most preferred to use a lipid extract isolated from cow's milk. The use of phospholipid from milk fat advantageously comprises the use of milk fat globule membranes, which are more reminiscent to the situation in human milk. The concomitant use of phospholipid derived from domestic animals milk and triglycerides derived from vegetable lipids therefore enables to manufacture coated lipid globules with a coating more similar to human milk, while at the same time providing an optimal fatty acid profile. Suitable commercially available sources for milk phospholipid are BAEF, SM2, SM3 and SM4 powder of Corman, Salibra of Glanbia, and LacProdan MFGM-10 or PL20 from Aria. Preferably the phospholipid is derived from milk lipid, more preferably from milk fat globule membrane (MFGM). Preferably the phospholipid is derived from cow's milk lipid, more preferably from cow's MFGM. Preferably the infant formula or follow on formula comprises phospholipid and glycosphingolipid and in a preferred embodiment the weight ratio of phospholipid : glycosphingolipid is from 2:1 to 10:1, more preferably 2:1 to 5:1.

Methods for obtaining lipid globules with an increased size and/or coating with phospholipid are for example disclosed in WO 2010/0027258 and WO 2010/0027259.

Lipid in the form of large lipid globules and the presence of phospholipid comprised in a coating of the lipid globules promotes improvement of eating behaviour in infants.

### Fatty acid composition

Herein LA refers to linoleic acid and/or acyl chain (18:2 n6); ALA refers to alpha-linolenic acid and/or acyl chain (18:3 n3); SFA relates to saturated fatty acids and/or acyl chains, MUFA relates to mono-unsaturated fatty acid and/or acyl chains, PUFA refers to polyunsaturated fatty acids and/or acyl chains with 2 or more unsaturated bonds; LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). PA relates to palmitic acid and/or acyl chains (C16:0). Medium chain fatty acids (MCFA) refer to fatty acids and/or acyl chains with a chain length of 6, 8 or 10 carbon atoms. n3 or omega 3 PUFA refers to polyunsaturated fatty acids and/or acyl chains with 2 or more unsaturated bonds and with an unsaturated bond at the third carbon atom from the methyl end of the fatty acyl chain, n6 or omega 6 PUFA refers to polyunsaturated fatty acids and/or acyl chains with 2 or more unsaturated bonds and with an unsaturated bond at the sixth carbon atom from the methyl end of the fatty acyl chain. BA refers to butyric acid (4:0).

The infant formula or follow on formula to be administered according to the present method preferably comprises LA. LA is an n6 PUFA and the precursor of n6 LC-PUFA and is an essential fatty acid as it cannot be synthesized by the human body. LA preferably is present in a sufficient amount in order to promote a healthy growth and development, yet in an amount as low as possible to prevent negative, competitive, effects on the formation of n3 PUFA and a too high n6/n3 ratio. The infant formula or follow on formula therefore preferably comprises less than 25 wt.% , more preferably less than 20 wt.%, more preferably less than 15 wt.% LA based on total fatty acids. The infant formula or follow on formula preferably comprises at least 5 wt.% LA based on fatty acids, preferably at least 7.5 wt.%, more preferably at least 10 wt.% based on total fatty acids.

The infant formula or follow on formula preferably comprises ALA. ALA is a n3 PUFA and the precursor of n3 LC-PUFA and is an essential fatty acid as it cannot be synthesized by the human body. Preferably ALA is present in a sufficient amount to promote a healthy growth and development of the infant. The infant formula or follow on formula therefore preferably comprises at least 0.5 wt.%, more preferably at least 1.0 wt.%, more preferably the infant formula or follow on formula comprises at least 1.5 wt.%, even more preferably at least 2.0 wt.% ALA based on total fatty acids. Preferably the infant formula or follow on formula comprises less than 10 wt.% ALA, more preferably less than 5.0 wt.% based on total fatty acids. The weight ratio LA/ALA preferably is well balanced in order to ensure an optimal n6/n3 PUFA, n6/n3 LC PUFA and DHA/ARA ratio in the cellular membranes. Therefore, the infant formula or follow on formula preferably comprises a weight ratio of LA/ALA from 2 to 20, more preferably from 3 to 15, more preferably from 5 to 12, more preferably from 5 to 10. Preferably the n6 PUFA/n3 PUFA weight ratio is from 3 to 20, more preferably from 3 to 15, more preferably from 5 to 12, more preferably from 5 to 10.

Preferably, the infant formula or follow on formula comprises n3 LC-PUFA, such as EPA, DPA and/or DHA, more preferably DHA. As the conversion of ALA to DHA may be less efficient in infants, preferably both ALA and DHA are present in the infant formula or follow on formula. Preferably the infant formula or follow on formula comprises at least 0.05 wt.%, preferably at least 0.1 wt.%, more preferably at least 0.2 wt.%, of DHA based on total fatty acids. Preferably the infant formula or follow on formula comprises not more than 2.0, preferably not more than 1.0 wt.%, of DHA based on total fatty acids.

The infant formula or follow on formula preferably comprises ARA. Preferably the infant formula or follow on formula comprises at least 0.05 wt.%, preferably at least 0.1 wt.%, more preferably at least 0.2 wt.%, of ARA based on total fatty acids. As the group of n6 fatty acids, especially arachidonic acid (ARA) counteracts the group of n3 fatty acids, especially DHA, the infant formula or follow on formula preferably comprises relatively low amounts of ARA. Preferably the infant formula or follow on formula comprises not more than 2.0 wt.%, preferably not more than 1.0 wt.%, of ARA based on total fatty acids. Preferably the weight ratio between DHA and ARA is between % to 4/1, more preferably between ½ to 2/1, more preferably between 0.67 and 1.5.

### Palmitic acid (PA) at sn-2 position of triglyceride

Triglycerides are the major fraction of the lipids in the formula. Triglycerides comprise a glycerol moiety to which, via ester bonds, three fatty acid residues are attached, which may be the same or different, and which are generally chosen from saturated and unsaturated fatty acids containing 4 to 26 carbon atoms. Such triglycerides may differ in the fatty acid residues that are present and/or may differ in the respective position(s) of the fatty acid residues to the glycerol backbone (e.g. in the sn-1, -2 and/or -3 position). Preferably the infant formula or follow on formula comprises at least 70 wt.%, more preferably at least 80 wt.%, more preferably at least 85 wt.% triglycerides, even more preferably at least 90 wt.% triglycerides based on total lipids, even more preferably at least 95 wt.% triglycerides based on total lipids.

Further improved eating behaviour was observed when the lipid component had an increased amount of palmitic acid (PA) acid located at the sn-2 position in a triglyceride, based on total PA. Lipids that can be used to enhance the amount of PA located at the sn-2 position in triglycerides based on total PA are commercially available - e.g. from Loders Croklaan under the name Betapol^{™} and/or can be prepared in a manner known per se, for instance as described in EP 0698078 and/or EP 0758846. Another suitable source is InFat^{™} of Enzymotec. In case these lipids are obtained by trans- or interesterification of vegetable triglycerides, these sources are in the context of the present invention regarded as vegetable lipids.

A preferred source for triglycerides to enhance PA at the sn-2 or beta position in a triglyceride is non-human animal fat, more preferably non-human mammalian milk fat, even more preferably cow's milk fat. Preferably non-human mammalian milk fat, in particular cow's milk fat, is used in the form of anhydrous milk fat or butter oil. Preferably the source of the milk fat is in a homogenous fat phase, such as butter oil or anhydrous milk fat, and not in the form of oil in water emulsion such as cream, since the lipid globules of the present invention can be more easily prepared during the manufacture of the infant formula or follow on formula for the method according to the present invention, when the lipid is added to the aqueous phase as homogenous fat phase, upon which the mixture is treated to form an emulsion.

Preferably the amount of the source of lipid comprising triglyceride that has an increased amount of palmitic acid residues in the sn-2 position of a triglyceride that is comprised in the lipid of the infant formula or follow on formula that is to be administered according to the present method is between 10 and 99.5 wt.%, more preferably between 10 and 80 wt.% based on total lipid, more preferably between 20 and 80 wt.%, more preferably between 20 and 50 wt.%, even more preferably between 25 and 50 wt.% based on total lipid. Such source of lipid is preferably milk fat, more preferably butter oil or anhydrous milk fat. Preferably the infant formula or follow on formula comprises milk fat between 5 and 95 wt.%, more preferably between 20 and 80 wt.% based on total lipid, more preferably between 25 and 75 wt.%, even more preferably between 40 and 60 wt.% based on total lipid.

The lipids used according to the present invention are preferably chosen such that the amount of palmitic acid (PA) that is present in the total lipid of the infant formula or follow on formula is at least 10 wt.% based on total fatty acid in the total lipid, preferably at least 15 wt.%. Preferably the amount of PA that is present in the lipids is below 30 wt.%, more preferably of 15 to 24 wt.% based on total fatty acids in the total lipid, even more preferably of 15 to 19 wt.%, even more preferably of 16 to 19 wt.%.

The lipids used according to the present invention are preferably chosen such that based on the total PA present in the lipid at least 15 wt.%, preferably at least 20 wt.%, more preferably at least 25 wt.%, more preferably at least 30 wt.% PA is in the sn-2 or beta position in a triglyceride. Preferably the amount of PA in the sn-2 position in a triglyceride is not more than 45 wt.%, preferably not more than 40 wt.% based on total PA. Preferably the amount of PA at sn-2 position in a triglyceride is of 25 to 40 wt% based on total PA.

Lipid in the form of large lipid globules and comprising a coating comprising phospholipid, together with an optimal fatty acid composition of the infant formula or follow on formula and the presence of an enhanced amount of sn-2 palmitic acid, showed a further unexpected improvement of eating behaviour.

### Digestible carbohydrates

The infant formula or follow on formula comprises digestible carbohydrate. The digestible carbohydrate preferably provides 30 to 80% of the total calories of the infant formula or follow on formula. Preferably the digestible carbohydrate provides 40 to 60% of the total calories. Based on calories the infant formula or follow on formula preferably comprises of 5 to 20 g of digestible carbohydrates per 100 kcal, more preferably 7.5 to 15 g. When in liquid form, e.g. as a ready-to-feed liquid, the infant formula or follow on formula preferably comprises 3.0 to 30 g digestible carbohydrate per 100 ml, more preferably 6.0 to 20, even more preferably 7.0 to 10.0 g per 100 ml. Based on dry weight the infant formula or follow on formula preferably comprises 20 to 80 wt.%, more preferably 40 to 65 wt.% digestible carbohydrates.

Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The infant formula or follow on formula preferably comprises lactose. The infant formula or follow on formula preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the infant formula or follow on formula preferably comprises at least 25 wt.% lactose, preferably at least 40 wt.%.

### Protein

The infant formula or follow on formula comprises protein. The protein preferably provides 5 to 15% of the total calories. Preferably the infant formula or follow on formula comprises protein that provides 6 to 12% of the total calories. More preferably protein is present in the infant formula or follow on formula below 3.5 gram per 100 kcal, more preferably the infant formula or follow on formula comprises between 1.8 and 2.1 g protein per 100 kcal, even more preferably between 1.85 and 2.0 g protein per 100 kcal. A low protein concentration advantageously is closer to human milk as human milk comprises a lower amount of protein based on total calories than cow's milk. The protein concentration in an infant formula or follow on formula is determined by the sum of protein, peptides and free amino acids. Based on dry weight the infant formula or follow on formula preferably comprises less than 12 wt.% protein, more preferably between 9.6 and 12 wt.%, even more preferably between 10 and 11 wt.%. Based on a ready-to-drink liquid product the infant formula or follow on formula preferably comprises less than 1.5 g protein per 100 ml, more preferably between 1.2 and 1.5 g, even more preferably between 1.25 and 1.35 g.

The source of the protein should be selected in such a way that the minimum requirements for essential amino acid content are met and satisfactory growth is ensured. Hence protein sources based on cows' milk proteins such as whey, casein and mixtures thereof and proteins based on soy, potato or pea are preferred. In case whey proteins are used, the protein source is preferably based on acid whey or sweet whey, whey protein isolate or mixtures thereof. Preferably the infant formula or follow on formula comprises at least 3 wt.% casein based on dry weight. Preferably the casein is intact and/or non-hydrolyzed. For the present invention protein includes peptides and free amino acids.

### Non digestible carbohydrates

In one embodiment the infant formula or follow on formula preferably comprises non-digestible oligosaccharides. Preferably the infant formula or follow on formula comprises non-digestible oligosaccharides with a degree of polymerization (DP) between 2 and 250, more preferably 3 and 60. The non-digestible oligosaccharides advantageously further promotes improved eating behaviour in an infant, in particular further promotes improvement of a decreased food responsiveness and a decreased general appetite.

Preferably the infant formula or follow on formula comprises fructo-oligosaccharides, galacto-oligosaccharides and/or galacturonic acid oligosaccharides, more preferably fructo-oligosaccharides and/or galacto-oligosaccharides, even more preferably galacto-oligosaccharides, most preferably transgalacto-oligosaccharides. In a preferred embodiment the infant formula or follow on formula comprises a mixture of galacto-oligosaccharides and fructo-oligosaccharides, more preferably transgalacto-oligosaccharides and fructo-oligosaccharides. Suitable non-digestible oligosaccharides are for example Vivinal^{®}GOS (FrieslandCampina DOMO), Raftilin^{®}HP or Raftilose^{®} (Orafti).

Preferably, the infant formula or follow on formula comprises 80 mg to 2 g non-digestible oligosaccharides per 100 ml, more preferably 150 mg to 1.50 g, even more preferably 300 mg to 1 g per 100 ml. Based on dry weight, the infant formula or follow on formula preferably comprises 0.25 wt.% to 20 wt.%, more preferably 0.5 wt.% to 10 wt.%, even more preferably 1.5 wt.% to 7.5 wt.%. A lower amount of non-digestible oligosaccharides will be less effective in promoting improved eating behaviour, whereas a too high amount will result in side-effects of bloating and abdominal discomfort.

### Formula

The method according to the present invention requires the administration of an infant formula or a follow on formula. This means that the composition that is administered is not human milk. Also it means that the composition that is administered is not native cow's milk or native milk from another mammal. Alternatively the term "formula" means that it concerns a composition that is artificially made or in other words that it is synthetic. Hence in one embodiment the composition that is administered is an artificial infant formula or an artificial follow on formula or a synthetic infant formula or a synthetic follow on formula. In the present context, infant formula refers to nutritional compositions, artificially made, intended for infants of 0 to about 4 to 6 months of age and are intended as a substitute for human milk. Typically infant formulae are suitable to be used as sole source of nutrition. Such formulae are also known as starter formula. Formula for infants starting with at 4 to 6 months of life to 12 months of life are intended to be supplementary feedings to infants that start weaning on other foods. Such formulae are also known as follow on formulae. Infant formulae and follow on formulae are subject to strict regulations, for example for the EU Commission Directive 2006/141/EC.

The infant formula or follow on formula preferably comprises 3 to 7 g lipid/100 kcal, preferably 4 to 6 g lipid/100 kcal, more preferably 4.5 to 5.5 g lipid/100 kcal, preferably comprises 1.7 to 5 g protein/100 kcal, preferably 1.8 to 3.5 g protein/100 kcal, more preferably 1.8 to 2.1 g protein/100 kcal, more preferably 1.8 to 2.0 g protein/100 kcal and preferably comprises 5 to 20 g digestible carbohydrate/100 kcal, preferably 6 to 16 g digestible carbohydrate/100 kcal, more preferably 10 to 15 g digestible carbohydrate/100 kcal.

Preferably the infant formula or follow on formula, when ready to drink has an energy density of 60 kcal to 75 kcal/100 ml, more preferably 60 to 70 kcal/100 ml. This density ensures an optimal balance between hydration and caloric intake.

In one embodiment, the infant formula or follow on formula is a powder. Suitably, the infant formula or follow on formula is in a powdered form, which can be reconstituted with water or other food grade aqueous liquid, to form a ready-to drink liquid, or is in a liquid concentrate form that should be diluted with water to a ready-to-drink liquid. It was found that lipid globules maintained their size and coating when reconstituted.

In this document and in its claims, the verb "to comprise" and its conjugations is used in its nonlimiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### Examples

### Example 1: Eating behaviour differs in infants receiving experimental formula compared to control formula at week 17

A randomised, controlled, double-blind trial was performed to investigate the effects of an experimental infant formula on growth, tolerance and safety in healthy term infants.

Healthy term infants ≤ 35 days of age who were exclusively formula fed by the time of enrolment (baseline/Visit 1) were randomised to receive either the experimental or the control product. Subjects in the intention to treat (ITT) and per protocol (PP) population were well balanced over the experimental and control groups with respect to the stratification factors sex and age at Visit 1/baseline (≤ 14 days, > 14 days) and continent (Europe vs. Asia). The average age at baseline (Visit 1) was 9 days in both randomised groups. The majority of the randomised subjects were Caucasian (90.59%). Birth weight ranged from 2335 to 4180 grams in both randomized groups. The mean gestational age was 39.4 weeks in both groups. The formula were taken until the age of 17 weeks.

The two study products used in this study were complete standard cow's milk-based infant formula that comprised per 100 ml ready to drink formula 66 kcal, 1.3 g protein (intact protein with a casein/whey ratio of 40/60), 7.3 g digestible carbohydrates (mainly lactose), 3.4 g fat and 0.8 g short chain galacto-oligosaccharides (source Vivinal^{®}GOS) and long chain fructo-oligosaccharides (source RaftilinHP^{®}) in a 9/1 w/w ratio, and minerals, vitamins trace elements and other micronutrients as known in the art and in compliance with directives for infant formula. The formula is provided as a powder with the instruction to reconstitute with water. About 13.6 g powder was reconstituted to 100 ml ready to drink infant formula.

Diet 1: Experimental infant formula:
The fat component consisted of about 51 wt.% vegetable fat (blend of low erucic acid rape seed oil, coconut oil, high oleic sunflower oil, sunflower oil), about 44 wt.% bovine anhydrous milk fat, 1.5 wt.% LC-PUFA containing oil (fish oil and microbial oil), 0.13 wt.% soy lecithin, about 3.6 wt.% milk fat derived from buttermilk rich in milk phospholipid or milk fat globule membranes (milk phospholipid is about 1.5 wt.% based on total lipid).

The lipid globules had a mode diameter, based on volume, of about 5.6 µm, and the volume % of lipid globules with a mode between 2 and 12 µm was above 45. The phospholipids were present in the coating on the surface of the lipid globules.

### Diet 2: Control formula

The lipid globules had a mode diameter, based on volume, of about 0.5 µm, and the volume % of lipid globules with a mode between 2 and 12 µm was below 10. No milk fat or milk derived phospholipid was added.

The fat component comprised mainly vegetable fat (blend of palm oil, low erucic acid rape seed oil, coconut oil, high oleic sunflower oil, sunflower oil, a small amount of soy lecithin (0.13 wt.%) and about 1.5 wt.% of an LC-PUFA premix (fish oil and microbial oil).

The fatty acid composition is very similar between diet 1 and 2, in saturated, mono unsaturated and poly unsaturated acids, and in n3- and n6-PUFA content. The amount of palmitic acid was 18.1 wt.% and 17.7 wt.% (based on total fatty acids) for diet 2 and 1, respectively. For diet 1 about 36 wt.% of the palmitic acid residues was in the sn2 position, for diet 2 this was about 12 wt.%. The amount of C4:0 (butyric acid) was 0.10 wt.% in diet 2 and 1.39 wt.% in diet 1, C6:0 (caproic acid) was 0.24 wt.% in diet 2 and 0.98 wt.% in diet 1. Both formula comprised long chain polyunsaturated fatty acids: docosahexaenoic acid (DHA) and arachidonic acid (ARA) in a ratio of 0.20:0.35. Linoleic acid (LA) was 14 wt%, alpha-linolenic acid was 2.6 wt%. The wt.% are based on total lipid in the infant formula.

223 subjects were randomised (ASR), 115 for the experimental group, and 108 for the control group. The ITT data set consisted of all subjects from the ASR group (ITT = ASR). The PP analysis restricts the analysis to the subjects who fulfil the protocol in the terms of the eligibility, interventions, instructions/restrictions and outcome assessment, and comprised 91 subjects in the experimental group and 83 in the control group.

At 17 weeks in a clinical study, baby eating behaviour questionnaires (Llewellyn et al., 2011, Appetite, 57:388-96) were filled in by the parents. The Baby Eating Behaviour Questionnaire (BEBQ) is an extensively validated tool which has shown to be able to assess eating behaviour in infants. The BEBQ generates scores on the following scales: food responsiveness, enjoyment of food, satiety responsiveness, slowness in eating and general appetite. The Baby Eating Behaviour Questionnaire (BEBQ) has 18 questions with answers on a 5-point scale (never, rarely, sometimes, often, always). The items are used to compute scores on the following scales: food responsiveness (6 items), enjoyment of food (4 items), satiety responsiveness (3 items), slowness in eating (4 items) and general appetite (1 item).

A significant difference was observed in eating behaviour between the experimental and control group, see Table 1.

No statistically significant effect on enjoyment of food was observed. A reduction in food responsiveness, an increase in satiety responsiveness, an increased slowness in eating, and decreased general appetite was observed. In particular a reduction in food responsiveness, and decreased general appetite was observed. Cohen's d values are about 0.2, indicating a small but not trivial effect. Cohen's d for food responsiveness was highest: 0.27. Cramer's V for general appetite was 0.204 which indicates a medium effect size. Similar trends were obtained in additional analyses of the PP population. These data are indicative of an improved eating behaviour in infants that receive the experimental formula.

**Table 1: BEBQ outcome of infants receiving experimental compared to infants receiving control formula at week 17, ITT**

| Parameter | Experimental Formula [N=115] | Control Formula [N=108] | |
|---|---|---|---|
| n (Nmiss) | 90 (25) | 82 (26) | p* |
| Food responsiveness score | | | |
| Median (Q1-Q3) | 1.7 (1.2-2.3) | 2.0 (1.5-2.7) | 0.04 |
| Mean (SD) | 1.92 (0.86) | 2.15 (0.84) | |
| Enjoyment of food score | | | |
| Median (Q1-Q3) | 4.5 (4.3-5.0) | 4.5 (4.3-5.0) | 0.49 |
| Mean (SD) | 4.47 (0.54) | 4.56 (0.42) | |
| Satiety responsiveness score | | | |
| Median (Q1-Q3) | 2.0 (1.7-3.0) | 2.0 (1.5-2.7) | 0.22 |
| Mean (SD) | 2.25 (0.94) | 2.02 (0.68) | |
| Slowness in eating score | | | |
| Median (Q1-Q3) | 2.5 (2.0-3.0) | 2.3 (1.8-2.8) | 0.10 |
| Mean (SD) | 2.48 (0.66) | 2.35 (0.64) | |
| General appetite score | | | |
| Median (Q1-Q3) | 4.0 (3.0-5.0) | 4.0 (4.0-5.0) | 0.02 |
| Mean (SD) | 3.73 (1.15) | 4.14 (0.96) | |

| | | | |
|---|---|---|---|
| Scale: 1=never, 2=rarely, 3=sometimes, 4=often, 5=always. [N]=Number of subjects of the analysis population, [n]=number of non-missing subjects, [Nmiss]=number of missing subjects. *: P < 0.05 experimental formula compared with control formula at week 17, Wilcoxon-Mann-Whitney test. | | | |

## Claims

1. A non-medical method for promoting improved eating behaviour in an infant, said method comprising feeding said infant an infant formula or follow on formula comprising lipid, protein and digestible carbohydrates, wherein the lipid is in the form of lipid globules, and
a. the lipid globules have a mode diameter based on volume of at least 1 µm and/or at least 45 vol.% of the lipid globules has a diameter of 2 to 12 µm, and
b. the lipid comprises at least 0.5 wt.% phospholipid based on total lipid and the lipid globules have a coating comprising phospholipid,
wherein the improved eating behaviour is selected from the group consisting of a decreased food responsiveness and a decreased general appetite as determined using the Baby Eating Behaviour Questionnaire (BEBQ) according to Llewellyn et al., 2011, Appetite, 57:388-96, wherein the lipid contains at least 10 wt.% palmitic acid based on total fatty acids, and at least 15 wt.% of palmitic acid, based on total palmitic acid, is located at the sn-2 position of a triglyceride, wherein the infant formula or follow on formula is not human milk and wherein the infant formula or follow on formula is used at least during the first 2 months of life and is administered to an infant with an age below 6 months; and
wherein the improved eating behaviour is compared to the eating behaviour in infants fed infant formula or follow on formula that comprises vegetable fat that is present in the form of lipid globules with a mode diameter, based on volume, of about 0.5 µm, and wherein the lipid globules do not have a coating comprising phospholipid.

2. The non-medical method according to claim 1, wherein the infant is fed an infant formula.

3. The non-medical method according to claim 1 or 2, wherein the phospholipid comprises at least 5 wt.% sphingomyelin based on total phospholipid.

4. The non-medical method according to any one of the preceding claims, wherein the lipid comprises at least 0.5 wt.% alpha-linolenic acid based on total fatty acids and at least 5 wt.% linoleic acid based on total fatty acids.

5. The non-medical method according to any one of the preceding claims, wherein the lipid comprises at least 0.1 wt.% docosahexaenoic acid based on total fatty acids.

6. The non-medical method according to any one of the preceding claims, wherein the content of palmitic acid is 15 to 30 wt.% based on total fatty acids and 25 to 40 wt.% of the palmitic acid based on total palmitic acid is in the sn-2 position of a triglyceride.

7. The non-medical method according to any one of the preceding claims, wherein the infant formula or follow on formula comprises 0.25 to 20 wt.% non-digestible oligosaccharides based on dry weight of the formula.

8. The non-medical method according to claim 7, wherein the non-digestible oligosaccharides comprise galacto-oligosaccharides and/or fructo-oligosaccharides.

9. The non-medical method according to any one of the preceding claims, wherein the infant formula or follow on formula comprises 1.8 to 3.5 g protein/100 kcal, preferably 1.8 to 2.1 g protein/100 kcal, 4 to 6 g lipid/100 kcal, 5 to 20 g digestible carbohydrates/100 kcal.

10. The non-medical method according to any one of the preceding claims, wherein the infant formula or follow on formula when ready to drink comprises 60 to 70 kcal per 100 ml.

11. The non-medical method according to any one of the preceding claims, wherein the lipid comprises a source for triglycerides to enhance palmitic acid at the sn-2 or beta position in a triglyceride which is non-human mammalian milk fat, preferably cow's milk fat, and the non-human mammalian milk fat is present in an amount between 10 and 80 wt.% based on total lipid.

## Patentansprüche

1. Nicht-medizinisches Verfahren zur Förderung eines verbesserten Essverhaltens bei einem Säugling, wobei das Verfahren das Füttern des Säuglings mit einer Säuglingsanfangsnahrung oder -folgenahrung umfasst, die Lipid, Protein und verdauliche Kohlenhydrate umfasst, wobei das Lipid in der Form von Lipidkügelchen vorliegt, und
a. die Lipidkügelchen einen auf das Volumen bezogenen Modaldurchmesser von mindestens 1 µm aufweisen und/oder mindestens 45 Vol.-% der Lipidkügelchen einen Durchmesser von 2 bis 12 µm aufweisen, und
b. das Lipid mindestens 0,5 Gew.-% Phospholipid, bezogen auf das Gesamtlipid, umfasst und die Lipidkügelchen eine Phospholipid umfassende Beschichtung aufweisen,
wobei das verbesserte Essverhalten aus der Gruppe ausgewählt ist, die aus einer verringerten Nahrungsaufnahmebereitschaft und einem verringerten allgemeinen Appetit besteht, wie unter Verwendung des Baby Eating Behaviour Questionnaire (BEBQ) gemäß Llewellyn et al., 2011, Appetite, 57:388-96, bestimmt, wobei das Lipid mindestens 10 Gew.-% Palmitinsäure enthält, bezogen auf die gesamten Fettsäuren, und mindestens 15 Gew.-% der Palmitinsäure, bezogen auf die gesamte Palmitinsäure, sich an der sn-2-Position eines Triglycerids befinden, wobei die Säuglingsanfangsnahrung oder -folgenahrung keine menschliche Milch ist und wobei die Säuglingsanfangsnahrung oder -folgenahrung mindestens während der ersten zwei Lebensmonate verwendet wird und einem Säugling im Alter von unter sechs Monaten verabreicht wird; und
wobei das verbesserte Essverhalten mit dem Essverhalten von Säuglingen verglichen wird, die mit Säuglingsanfangsnahrung oder -folgenahrung gefüttert werden, die pflanzliches Fett umfasst, das in Form von Lipidkügelchen mit einem Modaldurchmesser, bezogen auf das Volumen, von etwa 0,5 µm vorliegt, und wobei die Lipidkügelchen keine Phospholipid umfassende Beschichtung aufweisen.

2. Nicht-medizinisches Verfahren nach Anspruch 1, wobei der Säugling mit einer Säuglingsanfangsnahrung gefüttert wird.

3. Nicht-medizinisches Verfahren nach Anspruch 1 oder 2, wobei das Phospholipid mindestens 5 Gew.-% Sphingomyelin, bezogen auf das gesamte Phospholipid, umfasst.

4. Nicht-medizinisches Verfahren nach einem der voranstehenden Ansprüche, wobei das Lipid mindestens 0,5 Gew.-% alpha-Linolensäure, bezogen auf die gesamten Fettsäuren, und mindestens 5 Gew.-% Linolsäure, bezogen auf die gesamten Fettsäuren, umfasst.

5. Nicht-medizinisches Verfahren nach einem der voranstehenden Ansprüche, wobei das Lipid mindestens 0,1 Gew.-% Docosahexaensäure, bezogen auf die die gesamten Fettsäuren, umfasst.

6. Nicht-medizinisches Verfahren nach einem der voranstehenden Ansprüche, wobei der Gehalt an Palmitinsäure 15 bis 30 Gew.-%, bezogen auf die gesamten Fettsäuren, beträgt und 25 bis 40 Gew.-% der Palmitinsäure, bezogen auf die gesamte Palmitinsäure, sich in der sn-2-Position eines Triglycerids befinden.

7. Nicht-medizinisches Verfahren nach einem der voranstehenden Ansprüche, wobei die Säuglingsanfangsnahrung oder -folgenahrung 0,25 bis 20 Gew.-% nicht-verdauliche Oligosaccharide, bezogen auf das Trockengewicht der Nahrung, umfasst.

8. Nicht-medizinisches Verfahren nach Anspruch ,7, wobei die nicht verdaulichen Oligosaccharide Galacto-Oligosaccharide und/oder Fructo-Oligosaccharide umfassen.

9. Nicht-medizinisches Verfahren nach einem der voranstehenden Ansprüche, wobei die Säuglingsanfangsnahrung oder -folgenahrung 1,8 bis 3,5 g Protein/100 kcal umfasst, vorzugsweise 1,8 bis 2,1 g Protein/100 kcal, 4 bis 6 g Lipid/100 kcal, 5 bis 20 g verdauliche Kohlenhydrate/100 kcal.

10. Nicht-medizinisches Verfahren nach einem der voranstehenden Ansprüche, wobei die Säuglingsanfangsnahrung oder -folgenahrung im trinkfertigen Zustand 60 bis 70 kcal pro 100 mL umfasst.

11. Nicht-medizinisches Verfahren nach einem der voranstehenden Ansprüche, wobei das Lipid eine Quelle für Triglyceride umfasst, um Palmitinsäure an der sn-2- oder beta-Position in einem Triglycerid zu fördern, das nicht-menschliches Säugetiermilchfett, vorzugsweise Kuhmilchfett, ist, und wobei das nicht-menschliche Säugetiermilchfett in einer Menge zwischen 10 und 80 Gew.-%, bezogen auf das Gesamtlipid, vorhanden ist.

## Revendications

1. Procédé non médical pour promouvoir un comportement alimentaire amélioré chez un nourrisson, ledit procédé comprenant l'alimentation dudit nourrisson avec une formule pour nourrisson ou une formule de suite comprenant des lipides, des protéines et des hydrates de carbone digestibles, dans lequel le lipide se présente sous la forme de globules lipidiques, et
a. les globules lipidiques présentent un diamètre de mode basé sur un volume d'au moins 1 µm et/ou au moins 45 % en volume des globules lipidiques présentent un diamètre de 2 à 12 µm, et
b. le lipide comprend au moins 0,5 % en poids de phospholipides sur la base des lipides totaux et les globules lipidiques présentent un revêtement comprenant des phospholipides,
dans lequel le comportement alimentaire amélioré est choisi dans le groupe constitué d'une diminution de la réactivité alimentaire et d'une diminution de l'appétit général, comme déterminé à l'aide du Baby Eating Behaviour Questionnaire (Questionnaire sur le comportement alimentaire des bébés) (BEBQ) selon Llewellyn et al., 2011, Appetite, 57:388-96, où les lipides contiennent au moins 10 % en poids d'acide palmitique sur la base des acides gras totaux, et au moins 15 % en poids d'acide palmitique, sur la base de l'acide palmitique total, sont situés à la position sn-2 d'un triglycéride, dans lequel la formule pour nourrisson ou la formule de suite n'est pas du lait humain et dans lequel la formule pour nourrisson ou la formule de suite est utilisée au moins pendant les 2 premiers mois de la vie et est administrée à un nourrisson âgé de moins de 6 mois ; et dans lequel le comportement alimentaire amélioré est comparé au comportement alimentaire chez les nourrissons nourris avec une formule pour nourrisson ou une formule de suite qui comprend une graisse végétale qui est présente sous la forme de globules lipidiques avec un diamètre de mode, basé sur le volume, d'environ 0,5 µm, et dans lequel les globules lipidiques ne comportent pas de revêtement comprenant un phospholipide.

2. Procédé non médical selon la revendication 1, dans lequel le nourrisson est nourri avec une formule pour nourrisson.

3. Procédé non médical selon la revendication 1 ou 2, dans lequel le phospholipide comprend au moins 5 % en poids de sphingomyéline par rapport aux phospholipides totaux.

4. Procédé non médical selon l'une quelconque des revendications précédentes, dans lequel les lipides comprennent au moins 0,5 % en poids d'acide alpha-linolénique sur la base des acides gras totaux et au moins 5 % en poids d'acide linoléique sur la base des acides gras totaux.

5. Procédé non médical selon l'une quelconque des revendications précédentes, dans lequel les lipides comprennent au moins 0,1 % en poids d'acide docosahexaénoïque sur la base des acides gras totaux.

6. Procédé non médical selon l'une quelconque des revendications précédentes, dans lequel la teneur en acide palmitique est de 15 à 30 % en poids sur la base des acides gras totaux et de 25 à 40 % en poids de l'acide palmitique sur la base de l'acide palmitique total sont en position sn-2 d'un triglycéride.

7. Procédé non thérapeutique selon l'une quelconque des revendications précédentes, dans lequel la formule pour nourrisson ou la formule de suite comprend de 0,25 à 20 % en poids d'oligosaccharides non digestibles sur la base du poids sec de la formule.

8. Procédé non médical selon la revendication 7, dans lequel les oligosaccharides non digestibles comprennent des galacto-oligosaccharides et/ou des fructo-oligosaccharides.

9. Procédé non médical selon l'une quelconque des revendications précédentes, dans lequel la formule pour nourrisson ou la formule de suite comprend de 1,8 à 3,5 g de protéines/100 kcal, de préférence de 1,8 à 2,1 g de protéines/100 kcal, de 4 à 6 g de lipides/100 kcal, de 5 à 20 g d'hydrates de carbone digestibles/100 kcal.

10. Procédé non médical selon l'une quelconque des revendications précédentes, dans lequel la formule pour nourrisson ou la formule de suite, lorsqu'elle est prête à boire, comprend de 60 à 70 kcal pour 100 ml.

11. Procédé non médical selon l'une quelconque des revendications précédentes, dans lequel les lipides comprennent une source de triglycérides pour améliorer l'acide palmitique en position sn-2 ou bêta dans un triglycéride qui est de la graisse de lait de mammifère non humain, de préférence de la graisse de lait de vache, et la graisse de lait de mammifère non humain est présente en une quantité comprise entre 10 et 80 % en poids sur la base des lipides totaux.
